# EUROPEAN PATENT SPECIFICATION

(11) **EP 3 284 233 B1**
(45) Date of publication and mention of the grant of the patent: **27.02.2019**
(21) Application number: 15719159.4
(22) Date of filing: 14.04.2015
(51) Int. Cl.: H04L 29/06

(54) **IN-SESSION COMMUNICATION FOR SERVICE APPLICATION**
IN-SESSION-KOMMUNIKATION FÜR DIENSTANWENDUNG
COMMUNICATION EN COURS DE SESSION POUR APPLICATION DE SERVICES

(43) Date of publication of application: 21.02.2018
(73) Proprietor: Telefonaktiebolaget LM Ericsson (publ), 164 83 Stockholm (SE)
(72) Inventor: NOLDUS, Rogier August Caspar Joseph, 5052 BM Goirle (NL); DJORDJEVIC, Branko, 52134 Herzogenrath (DE); KANDASAMY, Ramsundar, 52070 Aachen (DE); LINDBLAD, Ingemar, 126 38 Hägersten (SE)
(74) Representative: Brann AB
(86) International application number: PCT/EP2015/058100
(87) International publication number: WO 2016/165749

(56) References cited:
- EP-A1- 1 700 419
- US-A1- 2014 310 421
- ROSENBERG DYNAMICSOFT H SCHULZRINNE COLUMBIA U J: "An Offer/Answer Model with the Session Description Protocol (SDP); rfc3264.txt", 20020601, 1 June 2002 (2002-06-01), XP015009042, ISSN: 0000-0003

## Description

### Technical Field

The present invention relates to a method to set up a communication path for exchange of service control messages by a service control entity with a service application entity and to the corresponding service control entity. The invention furthermore relates to a method for controlling an application of a service application entity carried out at a service control entity and to the corresponding service control entity. Additionally, a computer program and a computer program product is provided.

### Background

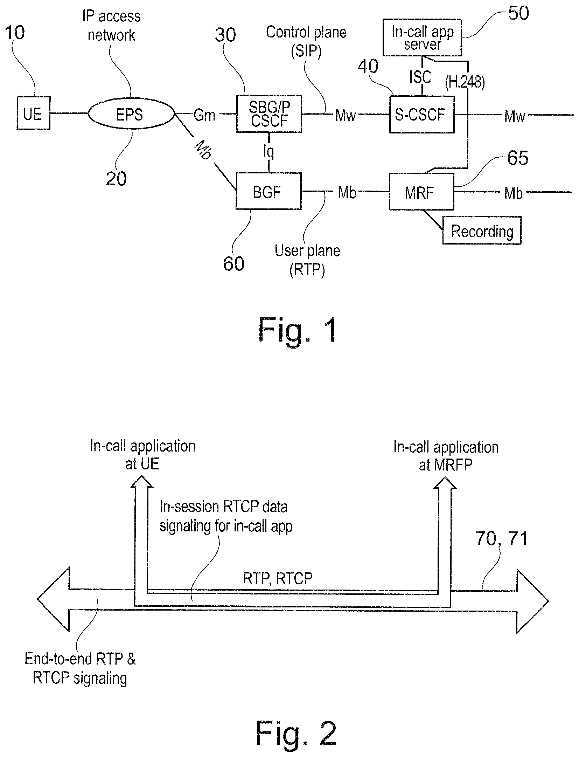

The architecture shown in Fig. 1 depicts an in-call application server 50 that has gained control over a call established by UE 10 (originating call) or established to the UE 10 (terminating call) and which is provided in the control plane. It is understood that there shall also be an MMTel-AS (Multi Media Telephony Application Service) connected to a S-CSCF (Service Call Session Control Function) 40 as well as an SCC-AS (Service Consistency and Continuity Application Service). The in-call application server 50 may be integrated in an entity like a SIP-AS. The H.248 functional connection between the in-call application server 50 and a MRF (Multimedia Resource Function) 65 is not formally specified, but is practically used. The in-call application server 50 may route the user plane through the MRF (Multimedia Resource Function) 65, the H.248 functional connection is created at the moment that MRF resources are seized. Routing the user plane through MRF 65 may be done at the moment in the call when the MRF resources are needed, e.g. for playing an announcement, or persistently during the call, e.g. to detect audible commands from the served subscriber. The MRF, to this end, contains an in-call application unit (not shown), which applies the service to the user plane under the control of the in-call application server 50. The H.248 functional connection, when established, is used by the in-call application server 50, to provide commands to the MRF 65, i.e. the application unit in the MRF 65, such as Start recording, Stop recording, Start speech-to-text conversion etc. and to receive indications from the MRF, such as tone detected or "speech command detected". The entity MRF 65 is meant here in general terms as a functional entity that applies any form of processing of the user plane data. The user plane passes the IP access network such as EPS (Evolved Packet System) and a BGF (Border Gateway Function) 60, wherein the control plane passes SBG/P-CSCF (Proxy-Call Session Control Function) 30.

In so far as an in-call app acts on the user plane, interaction is needed with the MRF 65. The MRF may e.g. be instructed to start recording the call.

There is no effective means for the UE 10 to control the MRF 65 directly. The UE has an RTP, Realtime Transport Protocol, session established towards the remote end; the RTP session traverses the MRF. In addition, an RTCP (Realtime Control Protocol) session is established towards the remote end, said RTCP session also traversing the MRF 65. Generally, RTP and RTCP are routed together over 'each user plane hop'.

The UE 10 could possibly provide commands to an MRFP (MRF Processor) through functional connection with the in-call application server 50, whereby the in-call application server then forwards the command to the MRFP, through the H.248 functional connection. When various commands from the UE relating to the MRFP specifically, such as Start/Stop recording and Speech recognition are considered, one will notice that the control of MRFP by UE via the in-call application server is not very efficient.

A further alternative method of MRFP control by UE 10 is that an additional functional connection is established between UE and MRFP, e.g. an HTTP connection. This method requires an additional mobile data connection. In addition, the mobile data connection requires authentication. Also, the MRFP will need to correlate the HTTP session with the RTP session.

J. Rosenberg et al. describe in "An Offer/Answer Model with the Session Description Protocol (SDP)" of June 2002 discloses a mechanism by which 2 entities can make use of the Session Description Protocol to arrive at a common view of a multimedia session between them.

US 2014/310421 A1 describes a method with which a Session Initiation Protocol dialogue can end independent of the fact whether the underlying media session will also end.

WO 2005/064849 A1 discloses a bidirectional communication between two parties via an IMS system in which a floor status information is transmitted using the SIP communication scheme.

Accordingly, a need exists to provide an efficient and transparent possibility to set up a secure communication path between a service control entity and a service application entity.

### Summary

This need is met by the features of the independent claims. Further aspects are described in the dependent claims.

According to a first aspect, a method is provided in which a service control entity sets up a communication path for exchange of service control messages with a service application entity in a mobile communications network for controlling an application of a service, by the service application entity according to the independent claim 1.

In the above method, the service control entity and the service application entity use a service control channel to inform one another that the service control entity and the service application entity are ready for directly exchanging service control messages. For this establishment of the communication, a service control channel is used, wherein the service control channel can be an end-to-end control channel between the service control entity and a remote end. By adding the offer data and by receiving the second message including the acceptance data with the receiver address, the service control entity is enabled to directly communicate to the service application entity and vice versa. The invention furthermore relates to the corresponding service control entity configured to carry out the above-mentioned steps to set up the communication path. The acceptance data can also include an indicator indicating that the service application entity is configured to support the communication path on the media data plane based on RTCP service control messages. With the established communication path, the service control entity can control the way how a service is applied to the media data flow.

The invention furthermore relates to the corresponding service control entity, according to the independent claim 9, configured to carry out the corresponding steps for controlling the service application entity.

The invention furthermore relates to a computer program comprising program code to be executed by at least one processor of a service control entity, wherein execution of the program code causes the service control entity to perform the above described methods, as described in the independent claim 12.

Furthermore, a computer program product is provided comprising program code to be executed by the at least one processor of the service control entity, the execution of the program code causing the service control entity to perform the above described steps, as described in the independent claim 13.

Further detailed embodiments are defined in the dependent claims.

Features mentioned above and features yet to be explained below may not only be used in isolation or in combination as explicitly indicated, but also in other combinations which fall in the scope as described in the appended claims.

### Brief Description of the Drawings

Various features of embodiments will become more apparent when read in conjunction with the accompanying drawings. In these drawings:
Fig. 1 is a schematic architectural representation of a network path including a call control application server known in the prior art.
Fig. 2 is a schematic view of how in-session RTCP data signaling can be used for communication between a service control entity and an in-call application.
Fig. 3 shows a schematic view of in-session RTCP data signaling used for controlling an application of a service to a media data flow.
Fig. 4 shows a structure of an RTCP application message.
Fig. 5 shows schematically an RTCP message exchange between a mobile entity as a service control entity and a multimedia resource function, MRF.
Fig. 6 shows a schematic representation of media exchange on an end-to-end user plane via RTP (Realtime Transport Protocol).
Fig. 7 shows an exemplary view of a concatenated offer-answer exchange between two mobile entities.
Fig. 8 schematically shows how information is exchanged between a mobile entity and a multimedia resource function for in-session RTCP message exchange.
Fig. 9 shows message exchange for the establishment of a communication path for exchange of service control messages.
Fig. 10 shows message exchange including the exchange of encryption keys between a mobile entity and a media resource function.
Fig. 11 shows message exchange for the exchange of encryption keys between the mobile entity and the media resource function with encryption keys from the media resource function.
Fig. 12 shows an architectural view of how a mobile entity such as a service control entity controls the application of a service provided by an in-call application server.
Fig. 13 shows a schematic view of an in-call application signaling relationship between a mobile entity and a Border Gateway Function.
Fig. 14 shows a schematic view of how a service is applied for providing a speech-to-text service in a Border Gateway Function.
Fig. 15 is a schematic view of how a text augmented voice call could look like at a mobile phone when the speech-to-text service has been applied.
Fig. 16 shows a schematic view of how an end-to-end text message is transferred for a voice call.
Fig. 17 shows a schematic block diagram of a service control entity.
Fig. 18 shows a schematic block diagram of a service application entity.

### Detailed Description of Embodiments

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are to be taken demonstratively only.

The drawings are to be regarded as being schematic representations, and elements illustrated in the drawings are not necessarily shown to scale. Rather, the various elements are represented such that their function and general purpose becomes apparent to a person skilled in the art. Any connection or coupling between functional bocks, devices, components or other physical or functional units shown in the drawings or described herein may also be implemented by an indirect connection or coupling. A coupling between components or functional elements may be established over a wired or wireless connection. Functional blocks may be implemented in hardware, firmware, software or a combination thereof.

As will be explained, techniques are described in which a mobile entity or service control entity, also called UE hereinafter shall have the capability to control a Multimedia Resource Function, MRF, through instructions carried over RTCP. In this context, an application message defined for RTCP may be used, wherein the use of RTCP application messages is also known as "Application Context". Before a mobile entity can send instructions to an MRF, an application relationship is established between the UE and the MRF. When a SIP session is established between the UE and the remote end, an RTP session is also established between the UE and the remote end. The RTP session traverses a Border Gateway Function, BGF, at the IMS (IP Multimedia Subsystem) network edge, an MRF in the IMS network and potentially additional user plane entities. RTP messages are sent end-to-end traversing the BGF, MRF, and other user plane entities as shown in connection with Fig. 1. Likewise, RTCP messages may be sent end-to-end, traversing the user plane entities.

During the SIP session establishment, the BGF, MRF and other user plane entities are instructed by their respective control plane entity to create a through connection for the RTP stream and for the RTCP stream. In this process, the BGF and/or MRF may inform their respective control plane entity that it supports the capability to establish an RTCP in-session application signaling relationship. This information is then conveyed towards the UE. The in-session application signaling relationship enables the UE and the MRF and/or BGF to exchange RTCP messages for application control. Whereas the RTCP message exchange occurs end-to-end between the UE and the remote end, there is in-session RTCP message exchange between the UE and the MRF. In-session means that the routing of the RTCP message occurs as per the regular rules of RTCP message routing. However, the RTCP message contains an application identifier, indicating that the RTCP message is destined for a functional entity on the RTCP path.

This is explained in more detail in connection with Fig. 2. The end-to-end RTP and RTCP signaling is shown with reference numerals 71 and 70, respectively. The RTP carries the media stream to be exchanged between the UE and the remote end, and RTCP inter alia transmits information related to the transmission statistics.

The in-signaling relationship or communication path is then established between the in-call application at the mobile entity/user entity and the in-call application at the Multimedia Resource Function, e.g. the MRF processor, MRFP.

For a regular VoLTE (Voice over LTE (Long Term Evolution)) call, there is no need for MRF control, so its user plane is not routed through an MRF and there is no MRF in the path. Routing the user plane through MRF is done for specific call cases. For those call cases the MRF control through the user plane will be advantageous.

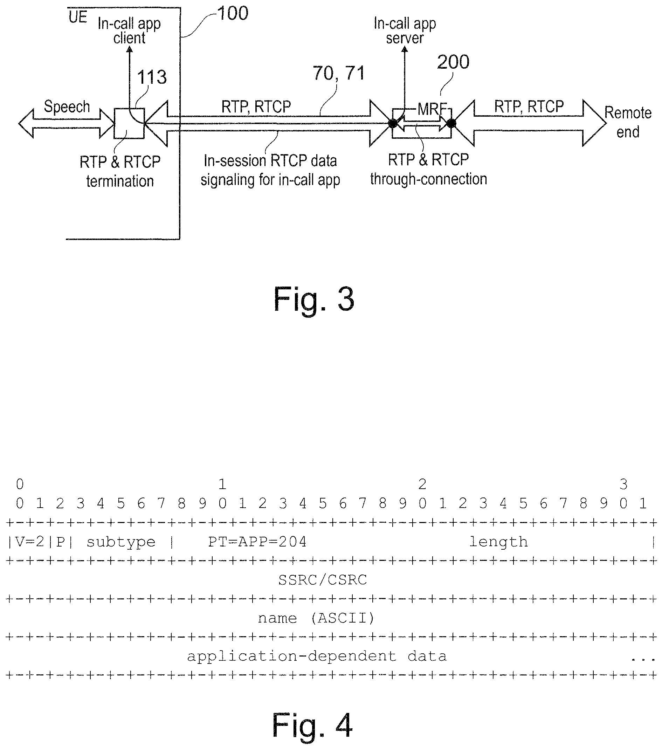

Fig. 3 helps to explain in more detail the invention. The RTP session 71 and the RTCP session 70 between a mobile entity 100 and the remote end is established as normal, based on end-to-end SDP (Session Description Protocol) negotiation as specified for the Session Initiation Protocol (SIP). The RTP and the RTCP session 71, 70 traverses an MRF 200. It may have been determined at call establishment that the user plane for this call needs to be routed through the MRF 200, for special media plane handling, e.g. for in-call applications. The MRF 200 works under control of the in-call application server, SIP-AS, in the IMS service layer domain. Fig. 3 reflects the reference point between the in-call application server and the MRF 200. The protocol used over that reference point is based on H.248, as is common for media gateway control. For the RTP and RTCP streams to traverse the MRF, through-connections are established in the MRF as shown in Fig. 3. So long as no action needs to be taken on the RTP stream, the through-connection of the RTP stream merely passes the RTP packets on between the mobile entity 100 and the remote end. For the RTCP stream, the MRF 200 applies a minimum form of inspection on the RTCP message before passing the message on, potentially with some modified data. An Application-Defined RTCP packet (APP) may be used for conveying in-call application data messages between the mobile entity 100 and the MRF 200.

Generally, when the UE 100 sends an RTCP message or an RTP message, the message is meant for the remote end. Rationale is that, despite the fact that the RTP & RTCP messages traverse one or more intermediate functional entities, the RTP session is established between the respective end-points. However, a method is defined whereby the UE 100 can send an RTCP message in the normal manner, addressed towards to the remote end, but meanwhile, the MRF determines that the RTCP message is actually meant for the MRF. Hence, there exists:
- End-to-end RTCP message exchange, between UE 100 and remote; end
- In-session RTCP message exchange, between UE 100 and MRF 200.

The RTP&RTCP session between UE 100 and remote end is hence used for conveying the in-session RTCP messages between UE 100 and MRF 200. In this manner, there is no impact on the RTCP routing as such; the MRF 200 merely determines for an RTCP message, that this message is an in-session RTCP message destined for the MRF. The MRF shall then pass the RTCP message on to the in-call application server resident in the MRF, as opposed to passing the RTCP message on towards the remote end.

The structure of the RTCP APP message is shown in Fig. 4 and is defined by IETF RFC 3550 as shown in Fig. 4. The indication PT=APP=204 in the header of the RTCP message indicates that the RTCP message is of the type APP. 204 is a standardized value for RTCP header classification. The "name" field in the header is, for the purpose of the invention, used to indicate that this APP message contains an in-call application control message. The name shall identify distinctively the in-call application server in the MRF 200. The other header fields shall be set as per the RTP standard.

In reverse direction, the same usage of RTCP messages applies. The in-call application server in the MRF 200 may send an in-call app related RTCP message towards the UE 100. The MRF shall hereto use PT=204 and shall indicate the in-call application in the Name field. The UE will, when receiving this RTCP message, determine that this RTCP message comprises an in-call app message. The UE shall then pass the RTCP message on to the in-call app client resident in the UE.

The application-dependent data carries the actual in-call user plane command or response from UE to MRF or from MRF to UE. In a preferred embodiment of the invention, the application-dependent data comprises the following information elements (IE):
- Origin: this IE identifies the sender of the in-call command. It shall correspond with the identifier used during the capability negotiation phase (in SDP offer-answer process) to identify this sending party, as described further on.
- Destination: this IE identifies the intended receiver of the in-call command. It shall correspond with the identifier used during the capability negotiation phase (in SDP offer-answer process) to identify this receiving party, as described further on.
- Command: this IE identifies the required command, such as "Start call recording" or "Apply speech recognition".
- Parameter(s): this IE contains a set of parameters required by the provided command. For the command "Apply speech recognition", one of the parameters could e.g. be "language=Swedish".

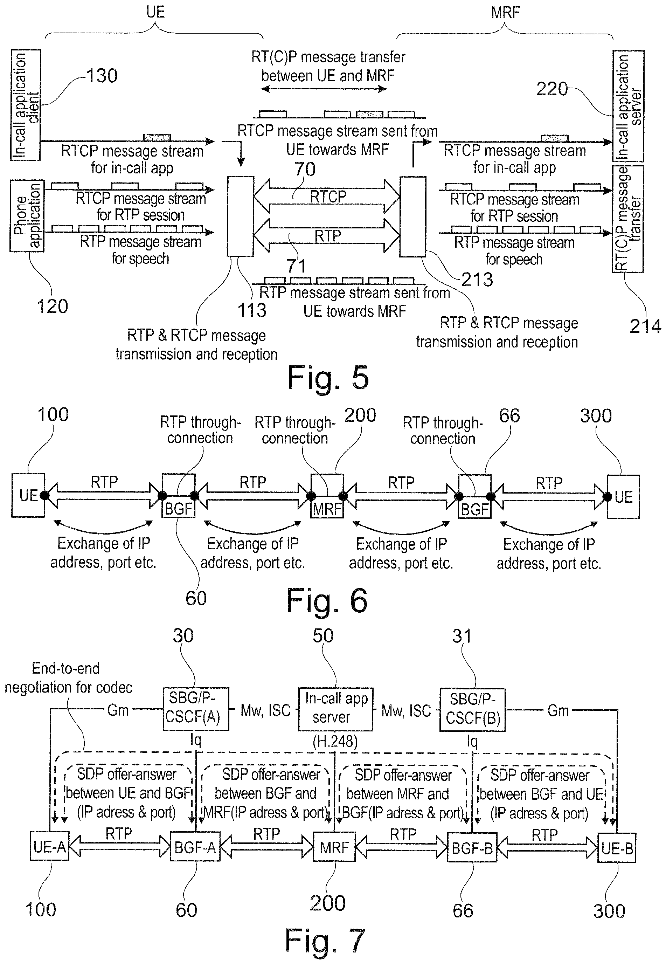

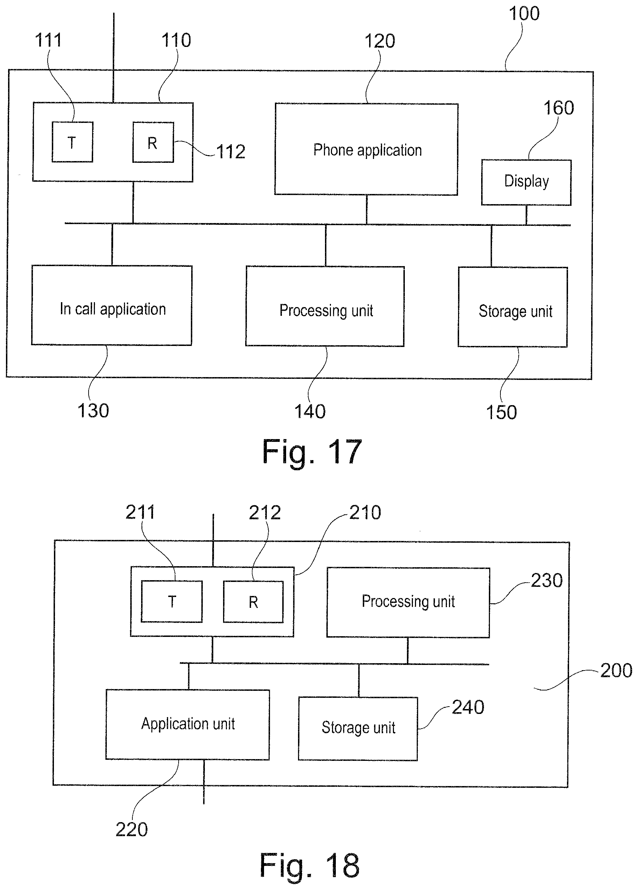

Fig. 5 depicts the RTP and RTCP signaling between the UE 100 and the remote end including in-session RTCP message exchange between UE 100 and MRF 200 for the in-call application control. Between the UE 100 and the MRF 200, there may be additional user plane entities such as a BGF. The RTP and the RTCP message stream traverses this/these additional user plane entities as normal. The MRF 200 passes the RTP/RTCP messages on towards the remote end except for the RTCP messages that are recognized as being in-call application related and that are destined for the in-call application server in the MRF 200. As shown in Fig. 5, an RTP message stream is transmitted from a phone application 120 in the mobile entity /UE 100 via a message transmission and reception entity 113, which may be part of an input/output unit of the mobile entity. Additionally, the RTCP message stream for the RTP session is transmitted towards the remote end, which, as shown in the left part of Fig. 5, includes information included by in-call application client 130. This indicator, the fully shaded packet in Fig. 5, is recognized by the RTP and RTCP message transmission and reception entity 213 of the MRF and is forwarded to the in-call application server 220 in the MRF, whereas the other messages in the RTCP message stream are forwarded as usual via RTCP message transceiver 214, which can be also part of an input/output unit 210 of the MRF which is described in more detail in Fig. 18.

RTCP message exchange occurs in both directions, i.e. from mobile entity 100 to the remote end and from the remote end to the mobile entity 100. The UE may likewise receive RTCP messages that are destined for the in-call application client 130 as opposed to being related to the RTP message stream. With this method the UE 100 and the MRF 200 can, when the RTP session is established between the UE 100 and the remote end, transparently exchange instructions and results related to the execution of in-call services with the RTP session traversing the MRF 200.

In the following, it will be described how capability exchange between the UE 100 and the MRF 200 can take place. It is described how the UE 100 and the MRF 200 inform each other about the support of in-session RTCP message exchange for the control of in-call applications. The capability exchange is accomplished through enhancement of the SDP offer-answer model. Although the SDP offer-answer signaling is taking place in the SIP signaling, the SDP offer-answer method is devised for the purpose of establishing a user plane session including details such as the IP address, port number, voice codec etc. This is shown in Fig. 6, which shows how the exchange of user plane characteristics between a mobile entity 100 and another mobile entity 300 takes place in an SDP offer-answer model. Fig. 6 only shows the user plane entities, such as BGF 60 or BGF 66, and MRF 200 that are relevant for the establishment of the user plane in this example.

The control plane passes, as shown in Fig. 7, P-CSCF 30 and P-CSCF 31. It is assumed that there is no transcoding needed and the codec negotiation for the end-to-end RTP session takes place between UE-A 100 and UE-B 300. The SIP entities in the control plane 30, 31 pass the codec information in the SDP offer-answer communication on without modifying it. The subsections of the RTP session do however have their own IP address and port number associated with them.

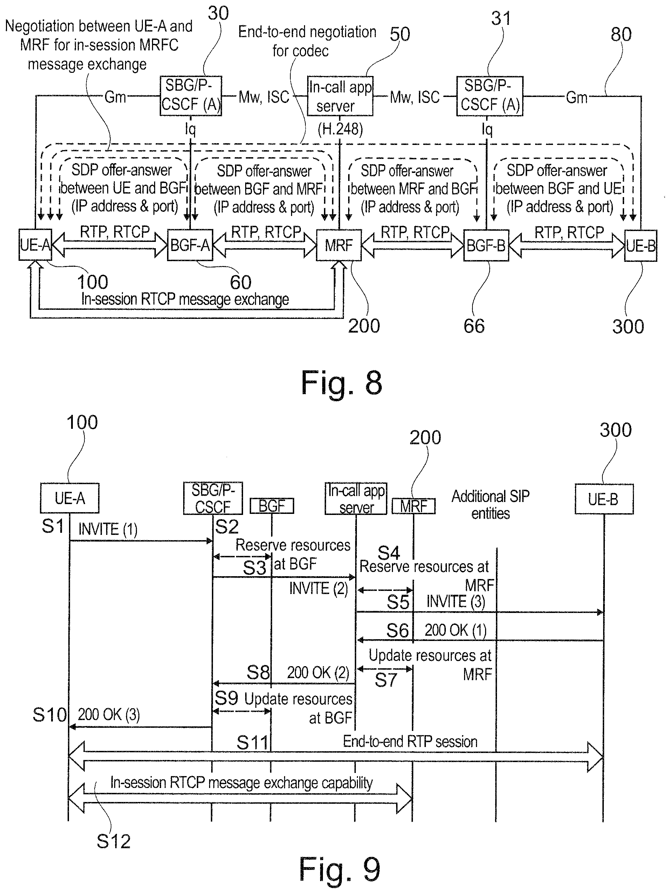

Fig. 8 shows how the SDP offer-answer mechanism is enhanced to accomplish also the capability exchange between the UE 100 and the MRF 200. Fig. 8, in addition to Fig. 7, shows the negotiation between the UE 100 and the MRF 200 for the in-session MRFC message exchange. As will be explained below, the UE 100 transmits a first message including offer with an indicator that the UE 100 is configured to support a communication path on the media data plane of the media data flow based on RTCP service control messages. The UE 100 can receive a message on the service control channel 80 of Fig. 8 in which the MRF 200 informs the mobile entity 100 that it accepts the set up of the communication path by including acceptance data in the response. The acceptance data include the receiver address at which the MRF is configured to receive RTCP service control messages.

Fig. 8 shows the signaling exchange in more detail. It shows the signaling exchange for a call establishment by UE-A 100 towards a remote party, here UE-B 300, whereby UE-A and the MRF 200 exchange capabilities related to the in-session RTCP message exchange for in-call application control. The pre-amble for this scenario is that the call is served by an in-call application server SIP-AS. Furthermore, the in-call application server SIP-AS anchors the user plane in the MRF 200. Furthermore, the MRF 200 is adapted for in-call applications. The MRF 200 supports a capability set for a mobile entity to control in-call applications. This capability set comprises a set of commands or operations that may be provided by the mobile entity 100 to the MRF 200.

In connection with Fig. 9 the message exchange is explained, wherein only the SIP messages that are relevant for the present invention. In step S1, an Invite message is transmitted to SBG (Session Border Gateway)/P-CSCF 30 containing an indication from UE-A 100 that it supports in-session RTCP message exchange with an MRF in the network that is adapted for in-call applications. This indication is contained in the SDP offer. More specifically, it is placed as an attribute line (a=...) for the media description for voice (m=...). The idea for associating this indication with a media description as opposed to placing it in the general section of the SDP is that each media line has an RTCP session associated with it. If the call has audio and video data, then there are two RTP streams and two RTCP streams. If, however, the call comprises only an audio command, then there is a single RTCP session and then the indication may be placed in the general section of the SDP. By way of example, *Invite <SDP offer> m*=*audio 49170 RTP*/*AVP 0 a*=*rtcp-in-session: sender*=*<IP address>; application*=*in-call-apps-control-v1.* When the SBG/P-CSCF reserves resources in the BGF (step S2), which it has selected for this call, it provides the SDP offer, including the indication of support of RTCP in-session signaling, to the BGF. The BGF, in this example, does not comprise any in-call application functionality and the BGF ignores this attribute line.

In step S3, the Invite message is forwarded by the SBG. The Invite request arrives at the in-call application server SIP-AS via the S-CSCF and SCC-AS. The SIP-AS reserves resources in the MRF (step S4) which is selected for this call. The SIP-AS provides the SDP offer including the indication of support of RTCP in-session signaling to the MRF 200. The MRF 200, in this example, comprises the in-call application functionality. Since (a) the UE has indicated support for RTCP in-session signaling and (b) the MRF supports this functionality, the MRF reports this capability to the SIP-AS along with other information that the SIP-AS has to send back towards the mobile entity 100 anyway in the SIP response, such as IP address and port number allocated by MRF 200 to the RTP session in upstream direction. It should be understood that the IP address and the port number may be mapped by the SBG before passing it on to the UE 100 since the user plane is anchored in the BGF.

In step S5, the Invite request is sent further towards to UE-B 300. The S-CSCF of UE-A may remove the indication of support of RTCP in-session signaling from the SDP offer. It is, however, not excluded that the indication of support of RTCP in-session signaling is not removed from the SDP offer. This indication may be needed for the end-to-end negotiation between calling and called party, so as to facilitate the exchange of RTCP embedded text messages between the two parties 100, 300 to augment the speech call. In step S6, the 200 Ok message arrives at the in-call SIP-AS. The SIP-AS updates the resources at the MRF as normal (step S7). In step S8, the 200 Ok message is sent upstream towards the UE. The 200 Ok includes the indication that the SIP-AS had received from the MRF with the indication that the MRF 200 supports the in-session RTCP signaling. This indication is included in the designated attribute line in the SDP answer. The SDP answer may look like: *m*=*audio 49170 RTP*/*AVP 0*
*a*=*rtcp-in-session: sender*=*<IP address>; application*=*in-call-apps-control-v1;*
*receiver*=*mrf.ims.operator.com.* This attribute line indicates that the entity mrf.ims.operator.com supports the RTCP in-session signaling for the in-call application functionality as requested in the SDP offer. The resources are updated at the BGF in step S9, and in step S10 the 200 Ok message is sent to the UE 100. The BGF did not indicate to the SBG that it, the BGF, supports in-session RTCP signaling, so the SBG does not further augment the designated attribute line in the SDP offer. As a result, in step 11 an end-to-end RTP session is established and in step 12 an in-session RTCP message exchange capability. It should be understood that steps 11 and 12 need not be carried out in the indicated order. They may also be established in simultaneously or step 11 may be established after step 12.

The end result is that the UE-A 100 has received an indication from MRF 200 through the SDP offer-answer sequence that the MRF 200 supports the RTCP in-call application signaling for this call. The UE 100 may hence send in-session RTCP messages towards the MRF 200, for in-call application control. As described earlier, the RTCP message is addressed in the normal manner, towards the IP address that the UE had received in the SDP answer. The RTCP message traverses BGF and when it arrives at the MRF, the MRF 200 determines that this RTCP message comprises an in-call application command etc. Vice versa, the MRF 200 can at any moment, e.g. in response to an in-call application command from the UE, send an in-session RTCP message towards the UE. The in-session RTCP message is marked accordingly and the UE will forward the RTCP message towards the in-call application client.

It is furthermore possible that both the BGF and the MRF 200 may indicate to the UE-A 100 that they (respectively) support in-session RTCP signaling. The SDP answer provided to UE-A 100 would then contain the following attribute line:
*a=rtcp-in-session: sender*=*<IP address>; application*=*in-call-apps-control-v1 ;*
*receiver*=*mrf. ims. operator. com; receiver*=*bgf. ims. operator. com*
As a result, an RTCP in-session signaling relation is established between UE-A 100 and BGF, as well as between UE-A 100 and MRF 200. UE-A may send instructions to BGF and/or to MRF 200, as required for the application installed in the UE. RTCP-embedded instructions for in-call applications are addressed for the intended receiver (BGF or MRFP).

The following applies to the inclusion of the sender address (sender=<IP address>) and the receiver address (receiver=mrf.ims.operator.com) in the attribute line. When the UE 100 establishes a SIP session with corresponding end-to-end media session and the UE indicates that it supports the in-session communication between UE 100 and MRF 200, then the inclusion of sender=<IP address> in the attribute line is not necessary. Reason is that the in-session communication on the user plane in so far as generated by the MRF 200, is always destined for the UE 100. I.e. the UE 100 will be the only receiver of this in-session communication. Regarding the receiver address, e.g. receiver=mrf.ims.operator.com, that will still be needed. The UE 100 needs to be informed about the address of the in-session entity with which the in-session communication is established over the user plane. This is needed so the UE can direct the in-session commands towards the respective entity, such as MRF. Over and above, as described already, there may be two entities in the user plane with which the UE has establishes in-session communication. For each entity with which an in-session communication session is established, the address should be signaled towards the UE 100.

Once the call is established, including the user plane (RTP session and RTCP session), the UE 100 can send in-call application commands to the BGF and/or to the MRF 200, provided that an RTCP in-session signaling relation is established with the BGF and/or the MRF respectively. The RTCP APP message is a non-confirmed message. When the UE sends an RTCP APP message that is directed to e.g. the MRF 200, by virtue of indication in the 'name' field of the header RTCP header, the MRF 200 processes the command conveyed in the RTCP message and then sends a response to the UE 100. The response shall, likewise, be an RTCP APP message whereby the 'name' field of the RTCP header indicates that the message is an in-call application message. The response message may comprise the result of the execution of the command.

The receiver of the RTCP APP message determines, by virtue of being explicitly addressed for this RTCP message, that this message is destined for this receiver. This aids the receiver also in forwarding the RTCP message to the in-session application, as opposed to forwarding the RTCP message to the regular RTCP client.

The command and the response may be provided in binary form, which is the most efficient in terms of data usage. Alternatively, the command and the response may be provided in XML form, allowing for greater flexibility. XML requires more data, so is less efficient in terms of data usage.

RTP and RTCP traffic sessions may be encrypted end-to-end. RTP/RTCP encryption would prevent an MRF, functionally located between UE and remote end, to read or send RTCP messages. Thus, encryption keys may be exchanged during the establishment of the media session. For explanatory purposes, the SDP Security Descriptions (SDES) method for media protection is considered. SDES entails that UE and remote end exchange encryption keys during session establishment. SDES requires secure control plane (SIP). For the purpose of secure media transport between UE and MRF, the present invention introduces two methods: (i) shared encryption keys and (ii) dedicated set of encryption keys.

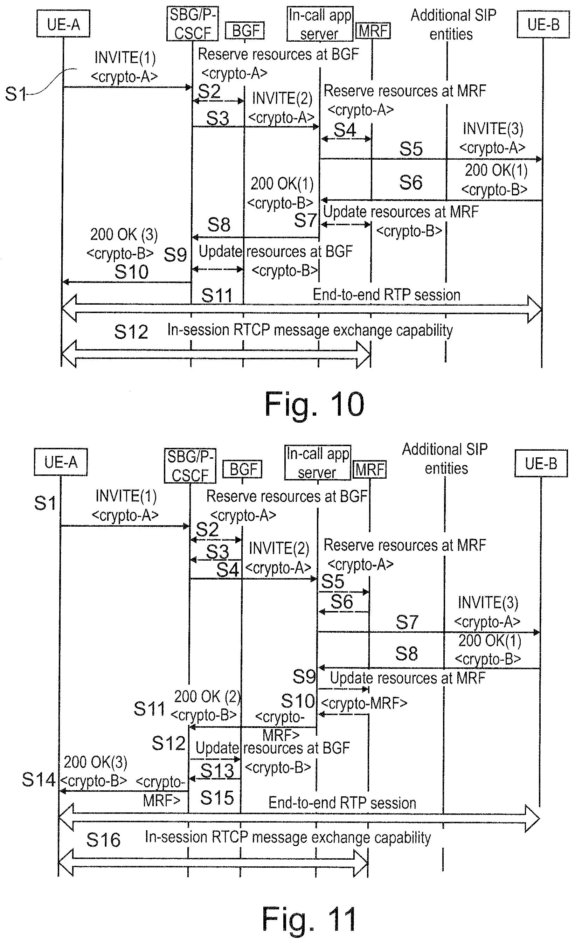

The method of shared encryption keys is now explained in connection with Fig. 10. In this example, an originating call is considered and the set of encryption keys that are provided by the UE 100 in the Invite request are provided by the in-call application server to the MRF along with other user plane related information. Otherwise, steps S1 to S4 correspond to steps S1 to S4 mentioned above in connection with Fig. 9. However, the 200 Ok for this Invite request contains the set of encryption keys that are provided by the remote end and that are destined for the calling party. In step S5, the message is forwarded to UE-B. Steps S6 to S12 correspond to steps S6 to S12 of Fig. 9, however, the 200 Ok for this request message contains the set of encryption keys provided by the remote end that are destined for the calling party, here UE-A. The in-call application server provides this set of encryption keys from the remote end to the MRF (as shown by step S4 and step S7). This enables the MRF to encrypt and decrypt RTP and RTCP messages for a transfer between the UE and the MRF. For Fig. 10 the following legend applies:

```
 <crypto-A> a=crypto:1 AES_CM_ 128_ HMAC_ SHA1_80
       inline:i6ri26ri72 36762 3487rkasdjhgf0-23487 5pweruygf
 <crypto-B> a=crypto:1 AES_CM_128_HMAC_SHA1_80
       inline:wwlkhfgsdkjhg9243875lskadjhgf283475lsad;kjgfs
```

The encryption keys are also provided to the BGF, but in this case the BGF does not establish a communication path with the UE. The BGF will ignore the encryption keys. The communication between in-call application server and the MRF as well as the communication between the SBG and the BGF shall be secure, which be implicit by virtue of this communication taking place within the operator domain.

Fig. 11 shows an example with a dedicated set of encryption keys for a UE-A originating call. The set of encryption keys that are provided by UE-A in the Invite request are provided by the in-call application server to the MRF along with other user plane related information (step S1 to S6) with steps S2 to S3 of Fig. 11 corresponding to step S2 and with steps S5 and S6 of Fig. 11 corresponding to step S4 of Fig. 10. If the UE intends to establish a UE-MRF communication channel, as described so far, then it provides its own set of encryption keys in return. The MRF provides the set of encryption keys to the in-call application server along with other user plane related information. The in-call application server can then forward the set of encryption keys towards the UE. The UE may in this manner receive two sets of encryption keys, one for protecting the end-to-end media session between UE-A and UE-B and the other one for protecting the media session with the MRF. When the MRF 200 then receives an RTP or an RTCP message that is destined for the MRF, as opposed to being destined for the remote end, then the MRF can still recognize the RTP/RTCP messages as being destined for the MRF, since the encryption is applied to the RTP/RTCP payload and not to the RTP/RTCP header. The MRF 200 had received encryption keys from the UE 100 so it can decrypt the payload. Likewise it can encrypt the payload since it had provided its set of encryption keys to the UE. Steps S7 to S16 correspond to steps S5 to S12 of Fig. 10, wherein step S7 of Fig. 10 is indicated by two separate steps S9 and S10 in Fig. 11 and step S9 of Fig. 10 is indicated in Fig. 11 as two different steps S12 and S13.

Thus, the encryption key of the MRF is forwarded to the UE-A in steps S10 to S14. Step S15 and S16 correspond to steps S11 and S12 of Fig. 10.

Another method for establishing encryption communication between UE 100 and MRF 200 (not shown in the figures) is the exchange of mutually designated set of encryption keys.

When the UE 100 establishes a call, it signals in the SDP offer and in the Invite request that it supports the capability of establishing a direct user plane relationship with the MRF 200. The UE 100 provides in the SDP two sets of encryption keys a) one encryption key destined for the remote end, and b) another encryption key destined for the MRF 200. Both the remote entity and the MRF 200 provide the respective encryption key. Hence, the UE receives two encryption keys, one originating from the remote end and another one originating from the MRF 200. The UE 100 and the MRF 200 can now exchange at RTP and RTCP messages, using the encryption keys to the media exchange specifically between them.

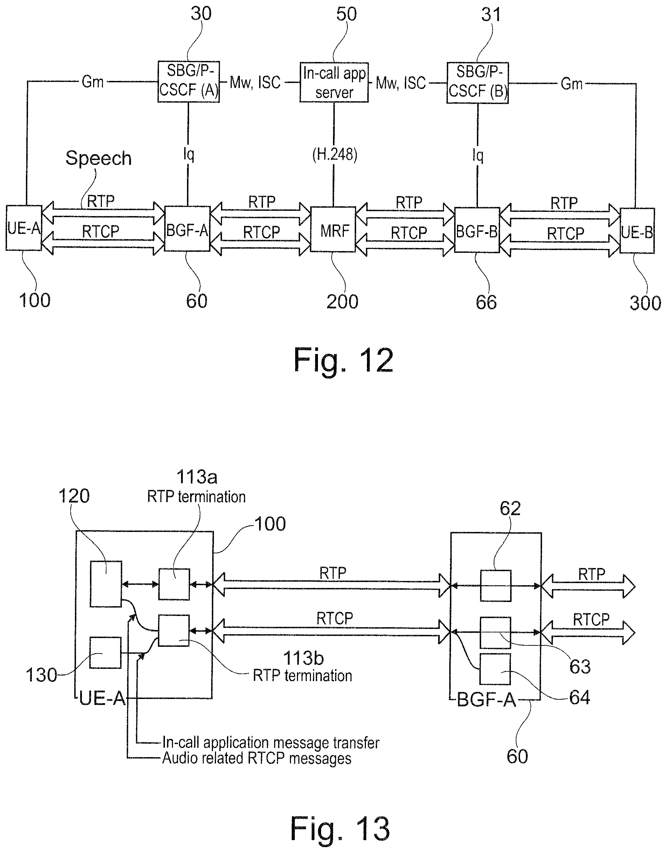

Fig. 12 shows an architectural view with the functional entities and reference points relevant for the explanation of the invention. It is understood that a) there is a IP access network between the UE and the core network and b) there are various addition sub-entities in the application server such as I-CSCF (Interrogating Coefficient Control Function), SCC-AS and MMTel-AS etc. The preamble to the example shown in Fig. 12 is that an end-to-end SIP call is established between UE-A 100 and UE-B 300. Furthermore, as can be seen an RTP end-to-end media exchange is established via BGF-A 60 and BGF-B 66 and the corresponding RTCP session. Furthermore, the service control channel between UE-A and UE-B and between UE-A and MRF 200 is present via P-CSCF 30 and in-call application server 50. During call establishment UE-A 100 and BGF-A 60 established a in-session signaling relationship and as will be explained below in connection with Fig. 13.

In Fig. 13, the UE comprises a phone application 120 and an in-call application 130 with an RTP termination 113a and an RTCP termination 113b. In-call application messages are exchanged between RTCP termination 113b and the in-call application 130, whereas audio related RTCP messages are only exchanged between the phone application 120 and RTCP termination 113b. In the BGF-A 60 in-call application messages are transferred to the in-call application 64, whereas the other audio related RTCP messages are transmitted via the RTCP through connection 63, RTP, through connection 62 being provided to forward RTCP messages from one remote end to the another remote end.

The in-session signaling relationship between the UE-A and the BGF enables UE-A 100 to provide instructions to BGF-A 60, such instructions being related to specific user plane processing. As described in more detail above, the providing of instructions by UE-A 100, through the injection of RTCP APP messages is envisaged to be driven by a designated terminal application. In one example, the designated terminal application may be invoked with the call establishment.

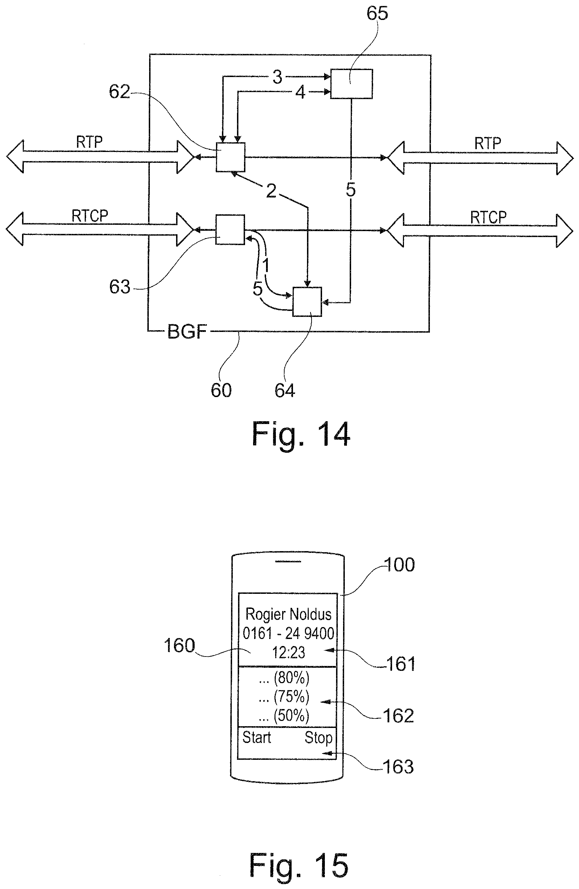

As shown in Fig. 14, the designated terminal application enables the user to request the BGF 60 to capture the audio from the remote party, to apply speech recognition on the audio and to provide the speech in text form. The requesting from UE to the BGF 60, to provide the audio from the remote party in text form is done by sending an in-call RTCP APP message to the BGF using the above-described in-session signaling relationship between UE-A and BGF 60. This signaling relationship and the RTCP is transmitted from the RTCP through connection 63 to the in-call application 64. In-call application 64 then instructs the speech recognition unit 65 to convert the speech signal transmitted through the RTP through-connection 62 into a text signal. The RTP through connection 62 transfers RTP messages end-to-end. Furthermore, the RTP through connection 62 may be instructed by the in-call application 64 to apply the speech from the remote party towards the speech recognition unit 65. The RTCP through connection 63 is such that RTCP messages are transferred end-to-end such as between UE-A and UE-B, as well as between two functionally connected RTP termination points such as between UE-A and BGF-A as known. Furthermore, the RTCP APP messages that are marked as destined for the BGF in-call application are transferred towards the in-call application 64. The in-call application 64 may receive an instruction from the UE-A to apply speech recognition from the remote party and to provide the speech in text form towards the UE-A. Hereto the in-call application instructs the RTP through connection 62 accordingly. The in-call application receives the speech in text form from the speech recognition unit 65. The message flow is as follows and is indicated in Fig. 11: In step 1 the RTCP APP messages transmitted towards the BGF in-call application 64. In step 2 shown in Fig. 14, a functional connection between in-call application and the RTP through connection 62 is established. Furthermore, the in-call application 64 is instructed to replicate speech from the remote party towards the speech recognition unit 65. In step 3, a functional connection between the RTP through connection 62 and the speech recognition unit 65 is established for seizing the speech recognition resources. In step 4, the speech from the remote party is replicated towards the speech recognition unit 65. In step 5, the text messages containing the speech are transferred towards the in-call application 64. The text messages containing the speech are then transferred as RTCP APP messages towards UE-A (step 6).

At any moment, the user, UE-A, may decide that he or she was to receive a speech from the remote party in the form of text messages and to receive these text messages on the phone on the display in the designated application window. The reason for this may be that a) the user experiences non-optimal radio connection resulting in the speech to get corrupted or lost; or b) the user's commandment of the language used in the phone conversation is not sufficient, seeing the speech from the remote party in the form of text messages will help the user in understanding the remote party.

The application resident in the user's terminal contains a drop-down menu offering the user to select the language used in the conversation.

The language may be required as input parameter for the speech recognition unit 65. However, as long as there is no translation, it may be not required for the speech recognition unit 65 to receive an explicit indication of the language. Considering that spoken words are spelled differently in different languages, it is envisaged that language indication will be required. So, when the served user requests the BGF through the transfer of an in-call application RTCP message, to apply speech recognition, that request may include an indication of the language.

In more general words this can mean that the application identifier added to the RTCP service control message contains at least one parameter relating to the command wherein the parameter is required in order to execute the command by the service application entity. Here, the parameter is the language that is needed by the speech recognition entity to execute the command, the speech recognition.

The BGF 60 contains an in-call application for this specific application. The speech recognition unit 65 in the BGF applying the speech recognition may use established technology known to recognize speech. The established technology comprises methods that determine natural pauses in the detected speech. The speech recognition unit 65 then uses these pauses to divide the speech in speech blocks which can be parsed through the speech recognition unit 65. The text messages are transferred to the UE-A of the user when the text message becomes available. This is schematically shown in Fig. 15 including a call information window 161 shown on a display 160. The call information window 161 can include information about the called or calling party. Furthermore, an additional window is shown, namely a text window 162 showing the captured speech samples. Each text line can contain a certainty indication providing the user an estimate of the expected correctness of the recognized text. Additionally, a control window 163 can be provided and which can be used for instructing the BGF resident in-call application 64 to start or stop speech recognition. It should be understood that this window can contain further options as appropriate.

It is appreciated that the text messages received by the user are not synchronized with the voice. The text messages will arrive at the UE with a certain delay. However, these text messages are deemed to augment the audible speech. They are not replacing the audible speech. It is further appreciated that the layout provided in Figure 15 is one example of screen layout. The actual layout will differ per phone/application.

The example is described with the in-call application residing in the BGF. Rationale of having the in-call application residing in BGF is that the BGF is normally in any case connected in the user plane of the call. Alternatively, speech recognition may be applied in a designated media entity such as an MRF 200. That would require, however, that the user plane is persistently anchored in an MRF during the call, so as to enable the end-user to instruct the MRF to apply speech recognition.

Alternatively, the user plane could be anchored in an MRF as and when needed and the anchoring in the MRF may then be removed when no longer needed. The UE may apply In-session communication between UE and SIP-AS for requesting the SIP-AS that provides/controls in-call applications, to ad hoc anchor the user plane through an MRF. This requires SDP update as appropriate. The SIP signaling applied for this SDP update shall comprise the information that is needed for establishing the in-call signaling relationship between UE and MRF.

The transfer of text messages, representing the speech, from MRF 200 to UE 100 may occur in a separate user plane. Reason is that when messages are transferred from MRF to UE whereby the text messages reflect the speech (resulting from speech-to-text conversion), then these text messages form a user plane. And hence, these messages should be transferred as RTP messages as opposed to RTCP messages.

Hereto, when the UE 100 establishes a call and intends to establish a direct user plane connection with the MRF 200, it provides an additional media line in the SDP, whereby the media line indicates 'text' as the type of user plane, eg.:
m=text 11000 RTP/AVP 98
a=rtpmap:98 t140/1000

The media line shall be followed with indication that this media line is destined for a user plane with the MRF, e.g.:
a=rtcp-in-session: sender=<IP address>; application=in-call-apps-control-v1

Optionally, this media line shall also be followed by the connection address that shall be used for this media line:
c=IN IP4 225.4.27.22/127

The MRF 200 will, during the establishment of the end-to-end media session, provide a response to this text media line. That response is transferred towards UE-A, in the aforedescribed manner. The effect of this method is that the text transfer, for the speech-to-text service of the MRF, is transported in a designated user plane. That user plane contains RTP messages containing text.

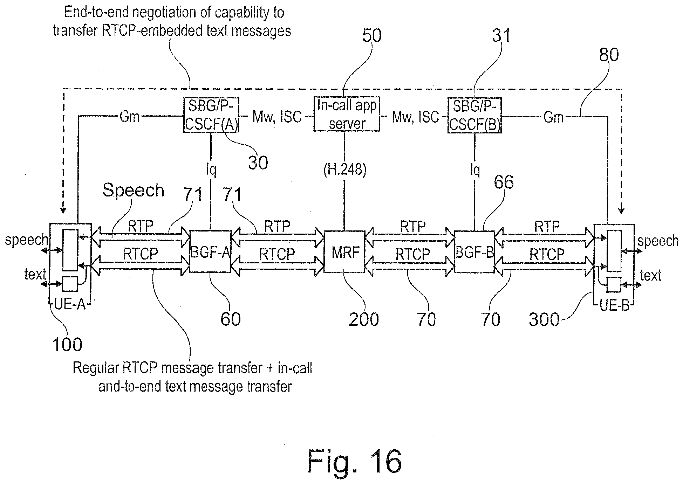

A further example described in connection with Fig. 16 provides an end-to-end text message transfer as complement to a voice call. User A 100 and user B 300 negotiate with one another the capability to use the end-to-end RTCP connection 70 for the exchange of short text messages. This negotiation occurs in accordance with the method described above. When the call is established, user A and user B have an application activated for the transfer of the text messages. The transfer of the text messages is transparent for the control plane, it occurs completely in the user plane. The text messages are not processed such as stored, analyzed or charged etc in the network, Thus, the SIP service control channel 80 is used for the end-to-end negotiation of the capability to transfer RTCP embedded text messages wherein the RTCP media data plane 70 contains the regular RTCP message transfer and the in-call end-to-end text message transfer.

RTP and RTCP messages may be subject to local interception by BGF and may as such be recorded. End-to-end text messages that are transferred through RTCP may hence be recorded by the network. However, RTP and RTCP messages are under normal operating conditions not recorded by the network. In this example, the text window 62 of Fig. 15 would contain the text messages. The shown window could contain indications indicating the names of the two parties with one party representing the sender of the text line, the other party being the receiver. In a further example, the end-to-end negotiation of the capability to RTCP embedded transfer of in-call text messages includes the transfer of a user name, e.g. a name. This name is used as a tag for text lines of the remote party, along with "me", for the user's own text lines. The text messages are strictly associated with the call. As long as the call is ongoing, the exchanged messages are visible in the text message window so that the user may be able to scroll through the messages in an intuitive way. When the call is terminated, the in-call text transfer window is discarded just like the call information window.

It is furthermore possible that the user could be given the option, at the end of the call, to save the text messages that are exchanged during the call and to store the text message exchange as part of the call log.

Fig. 17 is a schematic view of a mobile entity 100 which may operate as discussed above. The mobile entity 100 comprises an input/output unit 110 and a transmitter 111 and a receiver 112. The input/output unit 110 represents the possibility of the mobile entity 100 to communicate with other entities and with the transmitter providing the possibility to transmit control messages or user data to other entities, the receiver providing the possibility to receive control message or user data from other entities. The input/output unit may furthermore include the RTP/RTCP message transmission and reception elements 113 discussed above in connection with Fig. 5. A phone application 120 is provided, wherein the phone application 120 is used for the normal RTCP and RTP message stream as discussed above. In-call application unit 130 is used for the control of the in-call application as discussed above and can generate the corresponding in-call application messages discussed above. A processing unit 100 comprising one or more processors is provided and may be responsible for the operation of the whole mobile entity 100. The processing unit 140 can generate the commands that are needed to carry out the procedures of the mobile entity discussed above or further below at which the mobile entity is involved. A storage unit 150 can be provided which stores suitable program codes to be executed by the processing unit or other functional entities shown in Fig. 17. The display 160 can display the information required by the user of the mobile entity, e.g. the different windows discussed above in connection with Fig. 15.

In the same way, the multimedia resource function 200 of Fig. 18 comprises an input/output unit 210 with a transmitter 211 and a receiver 212. The transmitter 211 provides the possibility to transmit messages such as is control messages and user data to other entities, the receiver 212 providing the possibility to receive user data or control messages. It should be understood that both input/output units, input/output unit 110 and input/output unit 210 can be configured to operate in accordance with the different interfaces needed for communication with other entities or nodes. The application unit 220 provides the in-call application and may correspond to the in-call application 64 discussed above in connection with Fig. 14. A processing unit 230 comprising one or more processors is provided and can be responsible for the whole operation of the MRF 200. The processing unit 230 can generate the commands that are needed to carry out these procedures in which the MRF is included. A storage unit 240 can store a suitable program code to be executed by the processing unit or any of the other functional units shown in Fig. 18 so as to implement the needed functionalities of the MRF 200.

From the above said, some general conclusions can be drawn. A service control entity can set up a communication path for the exchange of service control messages with the service application entity. A first message including the offer data is transmitted on the service control channel, here the SIP channel 80 as shown - inter alia - in Fig. 8, the offer data including the indication that the service control entity such as UE 100 is supporting a communication path on the media data plane based on RTCP service control messages. When an answer is received, e.g. a second message on the service control channel comprising the acceptance data, a communication path between the service control entity and the service application entity can be set up.

The first message including the offer data and the second message including the acceptance data may be part of an offer-answer-sequence according to a session description protocol.

Both the first message and the second message can contain the indication that the corresponding entity is supporting a communication path on the media data plane based on RTCP service control messages and an address at which the corresponding entity is configured to receive the RTCP service control messages.

Furthermore, the service control channel can be an existing or to be established control channel between the service control entity and the remote end. In the examples, the service control channel can be the SIP session established between UE-A and UE-B.

The offer data may be contained in the first message as an attribute for the description of the media to be conveyed in the media data flow.

The service control entity can be a user equipment or mobile entity. Furthermore, the acceptance data contained in the second message may be provided as an attribute for the description of the media to be conveyed in the media data flow.

Furthermore, the service control entity receives an encryption key of the service application entity via the service control channel. It stores the encryption key of the service application entity and generates a control command for the service application entity comprising as a destination address an address of the remote end. The control command is then be encrypted using the stored encryption key from the service application entity. The encrypted control command is be transmitted on the media data plane in direction of the service application entity. The different encryption possibilities were discussed above in connection with Figs. 10 and 11.

The service control entity can furthermore add the transmitter address of the service control entity as an attribute for the description of the media to be conveyed in the media data flow to the offer data. The transmitter address can then indicate where the service control entity is configured to receive the RTCP service control messages. However, as discussed above, the transmitter address need not to be necessarily provided as the in-session communication is always destined for the UE and the UE will be the only receiver of the in-session communication.

Furthermore, the transmitter address and/or receiver address can contain the IP address and optionally a port number.

When the communication path between the service control entity and the service application entity has been set up, an application identifier can be added to the RTCP service control message including the receiver address and including the command to be carrier out by the service application entity. The application identifier can contain a transmitter address of the service control entity from which the RTCP service control message is transmitted towards the service application entity.

The RTCP service control message can be an RTCP application message and furthermore a name of the service application entity can be contained in the name field of a header of the RTCP service application message. Furthermore, as shown by the example of the speech recognition unit containing the language identifier, the application identifier can contain a parameter relating to the command where this parameter is required in order to execute the command.

Summarizing, the invention provides a method for service control entity such a as a mobile entity to establish relationship with a user plane entity and IMS as core network such as BGF or MRF for the transparent exchange of RTCP messages. These messages, referred to as in-session RTCP messages may be used by the mobile entity with the purpose of, for example in-call application control.

SDP offer-answer methodology is used for the exchange between the mobile entity and the service application entity, such as the MRF or the BGF.

Once the in-session RTCP message capability is exchanged between the service control entity and the service application entity, both entities can exchange RTCP messages transparently. These RTCO messages are transferred as per existing RTCP message transfer method, but the service application entity determines from the RTCP header that this message is meant specifically for the service application entity so the service application entity will forward the RTCP message to the corresponding application resident in the service application entity.

The above-described method provides a powerful, but easy-to-use way for a mobile entity or any other service control entity and a service application entity on the user plane path to exchange application control messages.

## Claims

1. A method, by a service control entity (100, 300), to set up a communication path for exchange of service control messages with a service application entity (200) in a mobile communications network for controlling an application of a service, by the service application entity (200), to a media data flow, the media data flow being established between the service control entity (100, 300) and a remote end, the method comprising the steps of:
- transmitting a first message on a service control channel (80), the first message comprising as a destination address an address of the remote end, wherein offer data is added to the transmitted first message, the offer data including an indicator indicating that the service control entity is configured to support a communication path on a media data plane (70) of the media data flow based on Real Time Transport Control Protocol, RTCP, service control messages,
- receiving a second message on the service control channel (80), wherein the second message comprises acceptance data in response to the offer data, the acceptance data comprising a receiver address at which the service application entity (200) is configured to receive RTCP service control messages,
- storing the receiver address at which the service application entity (200) is configured to receive RTCP service control messages in order to set up the communication path between the service control entity and the service application entity,
- receiving an encryption key of the service application entity (200) via the service control channel,
- storing the encryption key of the service application entity at the service control entity (100, 300),
- generating a control command for the service application entity (200), comprising as a destination address an address of the remote end,
- encrypting the control command using the stored encryption key from the service application entity (200),
- transmitting the encrypted control command on the media data plane in direction of the service application entity (200).

2. The method according to claim 1, wherein the first message and the second message are part of an offer-answer sequence according to a session description protocol.

3. The method according to claim 1 or 2, wherein the service control channel (80) is an existing or to be established control channel between the service control entity and the remote end.

4. The method according to any of the preceding claims, wherein the offer data are contained in the first message as an attribute for a description of the media to be conveyed in the media data flow.

5. The method according to any of the preceding claims, wherein the service control entity (100, 300) comprises a user equipment.

6. The method according to any of the preceding claims, wherein the acceptance data are contained in the second message as an attribute for a description of the media to be conveyed in the media data flow.

7. The method according to any of the preceding claims, further comprising the step of adding a transmitter address of the service control entity (100, 300) as an attribute for a description of the media to be conveyed in the media data flow to the offer data, the transmitter address indicating where the service control entity is configured to receive the RTCP service control messages.

8. The method according to any of the preceding claims, wherein at least one of the transmitter address and the receiver address contain an IP address and optionally a port number.

9. A service control entity (100, 300) configured to set up a communication path for exchange of service control messages with a service application entity (200) in a mobile communications network for controlling an application of a service, by the service application entity (200), to a media data flow, the media data flow being established between the service control entity and a remote end, the service control entity comprising:
- a transmitter (111) configured to transmit a first message on a service control channel (80), the first message comprising as a destination address an address of the remote end, wherein offer data is added to the transmitted first message, the offer data including an indicator indicating that the service control entity (100, 300) is configured to support a communication path on a media data plane of the media data flow based on Real Time Transport Control Protocol, RTCP, service control messages,
- a receiver (112) configured to receive a second message on the service control channel (80), wherein the second message comprises acceptance data in response to the offer data, the acceptance data comprising a receiver address at which the service application entity is configured to receive RTCP service control messages,
- a processing unit (140) configured to store the address at which the service application entity is configured to receive RTCP service control messages in order to set up the communication path between the service control entity and the service application entity,
wherein the receiver (112) is further configured to receive an encryption key of the service application entity (200) via the service control channel (80), the processing unit (140) being further configured to store the encryption key of the service application entity (200), to generate a control command for the service application entity (200) comprising as a destination address an address of the remote end, and to encrypt the control command using the stored encryption key from the service application entity, the transmitter (111) being further configured to transmit the encrypted control command on the media data plane in the direction of the service application entity (200).

10. The service control entity (100, 300) according to claim 9, wherein the transmitter (111) is configured to include the offer data in the first message as an attribute for a description of the media to be conveyed in the media data flow.

11. The service control entity (100, 300) according to any of claims 9 or 10, wherein the processing unit (140) is configured to add an address of the service control entity as an attribute for a description of the media to be conveyed in the media data flow to the offer data, the address indicating where the service control entity is configured to receive the RTCP service control messages.

12. A computer program comprising program code to be executed by at least one processor of a service control entity, or a service application entity, wherein execution of the program code causes the entity to perform the steps of a method according to any one of claims 1 to 8.

13. A computer program product comprising program code to be executed by at least one processor of a service control entity or a service application entity, wherein execution of the program code causes the entities to perform the steps of a method according to any one of claims 1 to 8.

## Patentansprüche

1. Verfahren durch eine Dienststeuerungsinstanz (100, 300) zum Einrichten eines Kommunikationspfads zum Austausch von Dienststeuerungsmeldungen mit einer Dienstanwendungsinstanz (200) in einem Mobilkommunikationsnetz zum Steuern einer Anwendung eines Dienstes durch die Dienstanwendungsinstanz (200) auf einen Mediendatenfluss, wobei der Mediendatenfluss zwischen der Dienststeuerungsinstanz (100, 300) und einem Remoteende eingerichtet wird, wobei das Verfahren die folgenden Schritte umfasst:
- Übertragen einer ersten Meldung auf einem Dienststeuerungskanal (80), die erste Meldung umfassend als Zieladresse eine Adresse des Remoteendes, wobei zur übertragenen ersten Meldung Angebotsdaten hinzugefügt werden, die Angebotsdaten beinhaltend einen Indikator, der anzeigt, dass die Dienststeuerungsinstanz so ausgelegt ist, dass sie einen Kommunikationspfad auf einer Mediendatenebene (70) des Mediendatenflusses basierend auf Echtzeit-Transport-Kontroll-Protokoll- (Real Time Transport Control Protocol, RTCP-)Dienststeuerungsmeldungen unterstützt,
- Empfangen einer zweiten Meldung auf dem Dienststeuerungskanal (80), wobei die zweite Meldung als Antwort auf die Angebotsdaten Annahmedaten umfasst, die Annahmedaten umfassend eine Empfängeradresse, an der die Dienstanwendungsinstanz (200) so ausgelegt ist, dass sie RTCP-Dienststeuerungsmeldungen empfängt,
- Speichern der Empfängeradresse, an der die Dienstanwendungsinstanz (200) ausgelegt ist, um RTCP-Dienststeuerungsmeldungen zu empfangen, um den Kommunikationspfad zwischen der Dienststeuerungsinstanz und der Dienstanwendungsinstanz einzurichten,
- Empfangen eines Chiffrierschlüssels von der Dienstanwendungsinstanz (200) über den Dienststeuerungskanal,
- Speichern des Chiffrierschlüssels der Dienstanwendungsinstanz an der Dienststeuerungsinstanz (100, 300),
- Erzeugen eines Steuerbefehls für die Dienstanwendungsinstanz (200), umfassend als Zieladresse eine Adresse des Remoteendes,
- Verschlüsseln des Steuerbefehls unter Verwendung des gespeicherten Chiffrierschlüssels von der Dienstanwendungsinstanz (200),
- Übertragen des verschlüsselten Steuerbefehls auf der Mediendatenebene in Richtung der Dienstanwendungsinstanz (200).

2. Verfahren nach Anspruch 1, wobei die erste Meldung und die zweite Meldung Teil einer Angebot-Antwort-Sequenz nach einem Sitzungsbeschreibungsprotokoll sind.

3. Verfahren nach Anspruch 1 oder 2, wobei der Dienststeuerungskanal (80) ein vorhandener oder einzurichtender Steuerungskanal zwischen der Dienststeuerungsinstanz und dem Remoteende ist.

4. Verfahren nach einem der vorhergehenden Ansprüche, wobei die Angebotsdaten als Attribut für eine Beschreibung der im Mediendatenfluss zu übermittelnden Medien in der ersten Meldung enthalten sind.

5. Verfahren nach einem der vorhergehenden Ansprüche, wobei die Dienststeuerungsinstanz (100, 300) ein Benutzergerät umfasst.

6. Verfahren nach einem der vorhergehenden Ansprüche, wobei die Annahmedaten als Attribut für eine Beschreibung der im Mediendatenfluss zu übermittelnden Medien in der zweiten Meldung enthalten sind.

7. Verfahren nach einem der vorhergehenden Ansprüche, ferner umfassend den Schritt des Hinzufügens einer Absenderadresse der Dienststeuerungsinstanz (100, 300) als Attribut für eine Beschreibung der im Mediendatenfluss zu übermittelnden Medien an die Angebotsdaten, wobei die Absenderadresse angibt, wo die Dienststeuerungsinstanz ausgelegt ist, um die RTCP-Dienststeuerungsmeldungen zu empfangen.

8. Verfahren nach einem der vorhergehenden Ansprüche, wobei wenigstens eine von der Absenderadresse und der Empfängeradresse eine IP-Adresse und gegebenenfalls eine Port-Nummer enthält.

9. Dienststeuerungsinstanz (100, 300), ausgelegt zum Einrichten eines Kommunikationspfads zum Austausch von Dienststeuerungsmeldungen mit einer Dienstanwendungsinstanz (200) in einem Mobilkommunikationsnetz zum Steuern einer Anwendung eines Dienstes durch die Dienstanwendungsinstanz (200) auf einen Mediendatenfluss, wobei der Mediendatenfluss zwischen der Dienststeuerungsinstanz und einem Remoteende eingerichtet wird, wobei die Dienststeuerungsinstanz Folgendes umfasst:
- einen Sender (111), so ausgelegt, dass er eine erste Meldung auf einem Dienststeuerungskanal (80) überträgt, die erste Meldung umfassend als Zieladresse eine Adresse des Remoteendes, wobei zur übertragenen ersten Meldung Angebotsdaten hinzugefügt werden, die Angebotsdaten beinhaltend einen Indikator, der anzeigt, dass die Dienststeuerungsinstanz (100, 300) ausgelegt ist, um einen Kommunikationspfad auf einer Mediendatenebene des Mediendatenflusses basierend auf Echtzeit-Transport-Kontroll-Protokoll- (Real Time Transport Control Protocol, RTCP-)Dienststeuerungsmeldungen zu unterstützen,
- einen Empfänger (112), so ausgelegt, dass er eine zweite Meldung auf dem Dienststeuerungskanal (80) empfängt, wobei die zweite Meldung als Antwort auf die Angebotsdaten Annahmedaten umfasst, die Annahmedaten umfassend eine Empfängeradresse, an der die Dienstanwendungsinstanz so ausgelegt ist, dass sie RTCP-Dienststeuerungsmeldungen empfängt,
- Prozessoreinheit (140), so ausgelegt, dass sie die Adresse speichert, an der die Dienstanwendungsinstanz ausgelegt ist, um RTCP-Dienststeuerungsmeldungen zu empfangen, um den Kommunikationspfad zwischen der Dienststeuerungsinstanz und der Dienstanwendungsinstanz einzurichten,
wobei der Empfänger (112) weiterhin
ausgelegt ist, um einen Chiffrierschlüssel von der Dienstanwendungsinstanz (200) über den Dienststeuerungskanal (80) zu empfangen, wobei die Prozessoreinheit (140) weiterhin
ausgelegt ist, um den Chiffrierschlüssel von der Dienstanwendungsinstanz (200) zu speichern, einen Steuerbefehl für die Dienstanwendungsinstanz (200) umfassend als Zieladresse eine Adresse des Remoteendes zu erzeugen und den Steuerbefehl unter Verwendung des gespeicherten Chiffrierschlüssels von der Dienstanwendungsinstanz zu verschlüsseln, wobei der Sender (111) weiterhin
ausgelegt ist, um den verschlüsselten Steuerbefehl auf der Mediendatenebene in Richtung der Dienstanwendungsinstanz (200) zu übertragen.

10. Dienststeuerungsinstanz (100, 300) nach Anspruch 9, wobei der Sender (111) ausgelegt ist, um die Angebotsdaten als Attribut für eine Beschreibung der im Mediendatenfluss zu übermittelnden Medien in der ersten Meldung einzuschließen.

11. Dienststeuerungsinstanz (100, 300) nach einem der Ansprüche 9 oder 10, wobei die Prozessoreinheit (140) ausgelegt ist, um eine Adresse der Dienststeuerungsinstanz als Attribut für eine Beschreibung der zu übermittelnden Medien im Mediendatenfluss zu den Angebotsdaten hinzuzufügen, wobei die Adresse anzeigt, wo die Dienststeuerungsinstanz ausgelegt ist, um die RTCP-Dienststeuerungsmeldungen zu empfangen.

12. Computerprogramm umfassend Programmcode, der von wenigstens einem Prozessor einer Dienststeuerungsinstanz oder einer Dienstanwendungsinstanz auszuführen ist, wobei das Ausführen des Programmcodes die Instanz dazu veranlasst, die Schritte eines Verfahrens nach einem der Ansprüche 1 bis 8 auszuführen.

13. Computerprogrammprodukt umfassend Programmcode, der von wenigstens einem Prozessor einer Dienststeuerungsinstanz oder einer Dienstanwendungsinstanz auszuführen ist, wobei das Ausführen des Programmcodes die Instanzen dazu veranlasst, die Schritte eines Verfahrens nach einem der Ansprüche 1 bis 8 auszuführen.

## Revendications

1. Procédé, mis en oeuvre par une entité de contrôle de services (100, 300), pour mettre en place un trajet de communication en vue de l'échange de messages de contrôle de services avec une entité d'application de services (200) dans un réseau de communications mobiles pour contrôler une application d'un service, par l'entité d'application de services (200), à un flux de données multimédia, le flux de données multimédia étant établi entre l'entité de contrôle de services (100, 300) et une extrémité distante, le procédé comprenant les étapes :
- d'émission d'un premier message sur un canal de contrôle de services (80), le premier message comprenant, comme adresse de destination, une adresse de l'extrémité distante, dans lequel des données d'offres sont ajoutées au premier message émis, les données d'offres incluant un indicateur indiquant que l'entité de contrôle de services est configurée pour prendre en charge un trajet de communication sur un plan de données multimédia (70) du flux de données multimédia sur la base des messages de contrôle de services du protocole de contrôle de transport en temps réel, RTCP,
- de réception d'un second message sur le canal de contrôle de services (80), dans lequel le second message comprend des données d'acceptation en réponse aux données d'offres, les données d'acceptation comprenant une adresse de récepteur au niveau de laquelle l'entité d'application de services (200) est configurée pour recevoir des messages de contrôle de services du RTCP,
- de stockage de l'adresse de récepteur au niveau de laquelle l'entité d'application de services (200) est configurée pour recevoir des messages de contrôle de services du RTCP afin de mettre en place le trajet de communication entre l'entité de contrôle de services et l'entité d'application de services,
- de réception d'une clé de chiffrement de l'entité d'application de services (200) par l'intermédiaire du canal de contrôle de services,
- de stockage de la clé de chiffrement de l'entité d'application de services au niveau de l'entité de contrôle de services (100, 300),
- de génération d'une commande de contrôle pour l'entité d'application de services (200), comprenant, comme adresse de destination, une adresse de l'extrémité distante,
- de chiffrement de la commande de contrôle à l'aide de la clé de chiffrement stockée en provenance de l'entité d'application de services (200),
- d'émission de la commande de contrôle chiffrée sur le plan de données multimédia en direction de l'entité d'application de services (200).

2. Procédé selon la revendication 1, dans lequel le premier message et le second message font partie d'une séquence d'offre-réponse conformément à un protocole de description de session.

3. Procédé selon la revendication 1 ou 2, dans lequel le canal de contrôle de services (80) est un canal de contrôle existant ou à établir entre l'entité de contrôle de services et l'entité distante.

4. Procédé selon l'une quelconque des revendications précédentes, dans lequel les données d'offres sont contenues dans le premier message en tant qu'attribut pour une description des données multimédia à transporter dans le flux de données multimédia.

5. Procédé selon l'une quelconque des revendications précédentes, dans lequel l'entité de contrôle de services (100, 300) comprend un équipement d'utilisateur.

6. Procédé selon l'une quelconque des revendications précédentes, dans lequel les données d'acceptation sont contenues dans le second message en tant qu'attribut pour une description des données multimédia à transporter dans le flux de données multimédia.

7. Procédé selon l'une quelconque des revendications précédentes, comprenant en outre l'étape d'ajout d'une adresse d'émetteur de l'entité de contrôle de services (100, 300) en tant qu'attribut pour une description des données multimédia à transporter dans le flux de données multimédia aux données d'offres, l'adresse d'émetteur indiquant où l'entité de contrôle de services est configurée pour recevoir les messages de contrôle de services du RTCP.

8. Procédé selon l'une quelconque des revendications précédentes, dans lequel au moins une adresse parmi l'adresse d'émetteur et l'adresse de récepteur contient une adresse IP et éventuellement un numéro de port.

9. Entité de contrôle de services (100, 300) configurée pour mettre en place un trajet de communication en vue de l'échange de messages de contrôle de services avec une entité d'application de services (200) dans un réseau de communications mobiles pour contrôler une application d'un service, par l'entité d'application de services (200), à un flux de données multimédia, le flux de données multimédia étant établi entre l'entité de contrôle de services et une entité distante, l'entité de contrôle de services comprenant :
- un émetteur (111) configuré pour émettre un premier message sur un canal de contrôle de services (80), le premier message comprenant, comme adresse de destination, une adresse de l'extrémité distante, dans lequel des données d'offres sont ajoutées au premier message émis, les données d'offres incluant un indicateur indiquant que l'entité de contrôle de services (100, 300) est configurée pour prendre en charge un trajet de communication sur un plan de données multimédia du flux de données multimédia sur la base des messages de contrôle de services du protocole de contrôle de transport en temps réel, RTCP,
- un récepteur (112) configuré pour recevoir un second message sur le canal de contrôle de services (80), dans lequel le second message comprend des données d'acceptation en réponse aux données d'offres, les données d'acceptation comprenant une adresse de récepteur au niveau de laquelle l'entité d'application de services est configurée pour recevoir des messages de contrôle de services du RTCP,
- une unité de traitement (140) configurée pour stocker l'adresse au niveau de laquelle l'entité d'application de services est configurée pour recevoir des messages de contrôle de services du RTCP afin de mettre en place le trajet de communication entre l'entité de contrôle de services et l'entité d'application de services, dans laquelle le récepteur (112) est en outre configuré pour recevoir une clé de chiffrement de l'entité d'application de services (200) par l'intermédiaire du canal de contrôle de services (80), l'unité de traitement (140) étant en outre configurée pour stocker la clé de chiffrement de l'entité d'application de services (200), pour générer une commande de contrôle pour l'entité d'application de services (200) comprenant, comme adresse de destination, une adresse de l'extrémité distante, et pour chiffrer la commande de contrôle à l'aide de la clé de chiffrement stockée en provenance de l'entité d'application de services, l'émetteur (111) étant en outre configuré pour émettre la commande de contrôle chiffrée sur le plan de données multimédia en direction de l'entité d'application de services (200).

10. Entité de contrôle de services (100, 300) selon la revendication 9, dans laquelle l'émetteur (111) est configuré pour inclure les données d'offres dans le premier message en tant qu'attribut pour une description des données multimédia à transporter dans le flux de données multimédia.

11. Entité de contrôle de services (100, 300) selon l'une quelconque des revendications 9 ou 10, dans laquelle l'unité de traitement (140) est configurée pour ajouter une adresse de l'entité de contrôle de services en tant qu'attribut pour une description des données multimédia à transporter dans le flux de données multimédia aux données d'offres, l'adresse indiquant où l'entité de contrôle de services est configurée pour recevoir les messages de contrôle de services du RTCP.

12. Programme informatique comprenant un code de programme à exécuter par au moins un processeur d'une entité de contrôle de services, ou d'une entité d'application de services, dans lequel l'exécution du code du programme amène l'entité à mettre en oeuvre les étapes d'un procédé selon l'une quelconque des revendications 1 à 8.

13. Produit-programme informatique comprenant un code de programme à exécuter par au moins un processeur d'une entité de contrôle de services ou d'une entité d'application de services, dans lequel l'exécution du code du programme amène les entités à mettre en oeuvre les étapes d'un procédé selon l'une quelconque des revendications 1 à 8.
